Europäisches Patentamt

European Patent Office

Office européen des brevets

(11) Veröffentlichungsnummer: **0 277 523**

**A2**

(12) **EUROPÄISCHE PATENTANMELDUNG**

(21) Anmeldenummer: **88100542.5**

(22) Anmeldetag: **16.01.88**

(51) Int. Cl.⁴: **B60R 13/10**

(30) Priorität: **24.01.87 DE 8701188 U**

(43) Veröffentlichungstag der Anmeldung:
**10.08.88 Patentblatt 88/32**

(84) Benannte Vertragsstaaten:
**CH DE ES FR GB GR LI NL SE**

(71) Anmelder: **Weigel, Hans**
**Kurt Schumacher-Strasse 2**
**D-7530 Pforzheim(DE)**

(72) Erfinder: **Weigel, Hans**
**Kurt Schumacher-Strasse 2**
**D-7530 Pforzheim(DE)**

(74) Vertreter: **Hubbuch, Helmut, Dipl.-Ing et al**
**Patentanwälte Dr. Rudolf Bauer Dipl.-Ing.**
**Helmut Hubbuch Dipl.-Phys. Ulrich**
**Twelmeier Westliche Karl-Friedrich-Strasse**
**29-31**
**D-7530 Pforzheim(DE)**

(54) **Verstärkungsunterlage aus Kunststoff für Zulassungskennzeichen, insbesondere für Kraftfahrzeuge.**

(57) Die Erfindung betrifft eine Verstärkungsunterlage aus Kunststoff für Zulassungskennzeichen, insbes. für Kraftfahrzeuge, wobei die Nummernschilder ohne Zerstörung nicht mehr abgenommen werden können, um Fälschungen zu vermeiden. Hierzu kennzeichnet sich die Verstärkungsunterlage aus Kunststoff gemäß der Erfindung dadurch, daß an Schultern Befestigungsaugen für Nummernschild vorgesehen sind zur unlösbaren Schildbefestigung bei abgedeckter Verschraubung der Unterlage mit dem Fahrzeug, wofür die Befestigungsaugen jeweils eine konische Bohrung aufweisen, in welcher ein innenkonischer Hohlpfropfen mit Halterand für das gelochte Nummernschild mittels Spreizstift unlösbar zu befestigen ist.

Fig.1

## Verstärkungsunterlage aus Kunststoff für Zulassungskennzeichen, insbesondere für Kraftfahrzeuge

Die Erfindung bezieht sich auf eine Verstärkungsunterlage aus Kunststoff für Zulassungskennzeichen, insbesondere für Kraftfahrzeuge.

Solche Verstärkungsunterlagen aus Kunststoff, mit welchen die Nummernschilder am Kraftfahrzeug angeschraubt werden, sind bekannt. Auch ist es bekannt, deren Rahmen am Unterrand als Werbefläche zu verbreitern, auf welcher Fläche sodann in aller Regel der Autohändler erscheint.

So kennt man Verstärkungsunterlagen aus Kunststoff für Zulassungskennzeichen, insbesondere für Kraftfahrzeuge, welche das Nummernschild rahmenförmig umgeben und eine Hinterlegfläche mit Befestigungsausnehmungen besitzen, wobei eine umlaufende Randschulter zur Auflage des Nummernschildes vorhanden ist.

Es ist nun Aufgabe der Erfindung, daß solche Nummern schilder mit Verstärkungsunterlage nicht mehr ohne Zerstörung abgenommen werden können, um Fälschungen zu vermeiden.

Hierfür kennzeichnet sich die Verstärkungsunterlage nach dem Oberbegriff des Anspruchs 1 gemäß der Erfindung dadurch, daß an dieser Schulter Befestigungsaugen für das Nummernschild vorgesehen sind zur unlösbaren Schildbefestigung bei abgedeckter Verschraubung der Unterlage mit dem Fahrzeug, wofür die Befestigungsaugen jeweils eine konische Bohrung aufweisen, in welcher ein innenkonischer Hohlpfropfen mit Halterand für das gelochte Nummernschild mittels Spreizstift unlösbar zu befestigen ist.

Nach einem weiteren Gedanken gemäß der Erfindung kann sich die Verstärkungsunterlage nach dem Oberbegriff von Anspruch 2 auch dadurch kennzeichnen, daß an dieser Schulter Befestigungsaugen für das Nummernschild vorgesehen sind zur unlösbaren Schildbefestigung bei abgedeckter Verschraubung der Unterlage mit dem Fahrzeug, wofür die Befestigungsaugen jeweils eine konische Bohrung aufweisen, welche sich in Einschubrichtung eines geschlitzten Pfropfens mit Halterand einerseits und überstehenden Endrand andererseits verengt, derart, daß dieser bei Einschub den Bohrungsendrand übergreift und damit unlösbar verankert ist.

In beiden Fällen wird somit eine abgedeckte und damit unzugängliche Befestigung der Verstärkungsunterlage mit dem Fahrzeug bei unlösbarer Schildbefestigung an der Unterlage erreicht. Auch kann bei der ersten Ausführung für ein Überführungsschild zunächst eine lösbare Befestigung erreicht werden, wenn der Spreizstift nach dem Einbringen an seinem überstehenden Ende noch nicht abgeschnitten wird.

Weitere Einzelheiten der Erfindung ergeben sich aus der nachfolgenden Beschreibung an Hand der Zeichnung eines bevorzugten Ausführungsbeispiels und zwar zeigen:

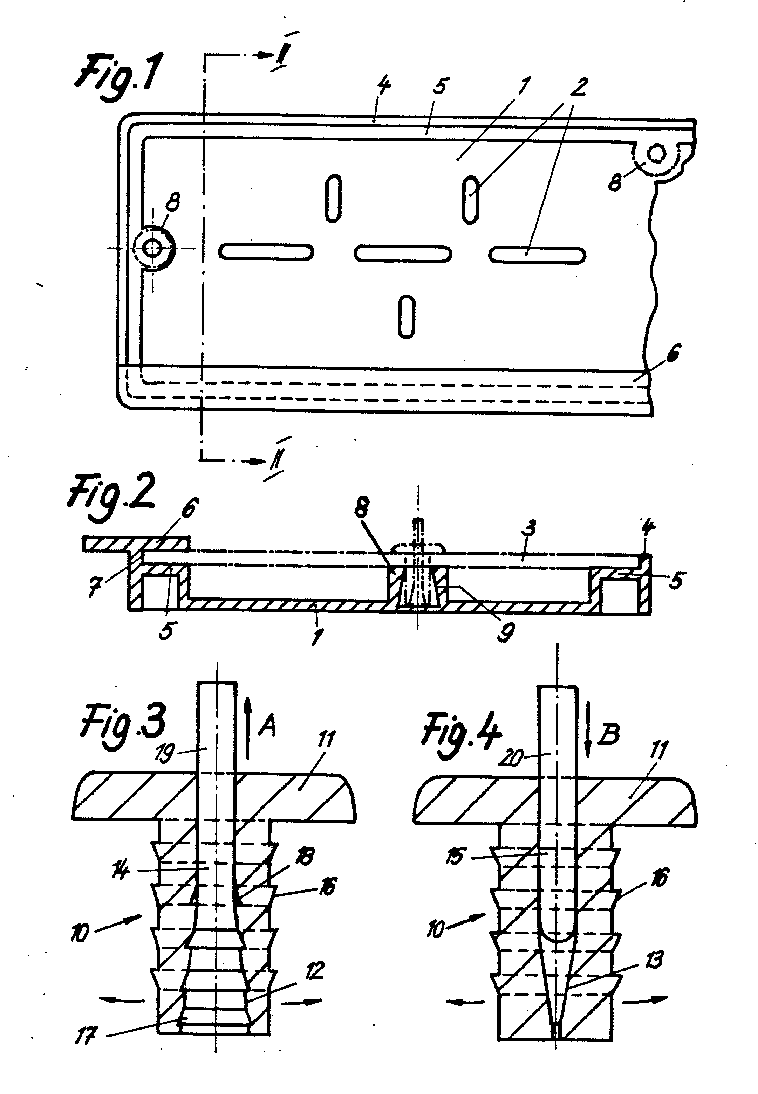

F i g. 1 und 2 die Ansicht und den Querschnitt einer Verstärkungsunterlage aus Kunststoff nach Linie II-II von Fig. 1,

F i g. 3 und 4 den Querschnitt durch zwei unlösbare Befestigungselemente für das Nummernschild auf der Verstärkungsunterlage,

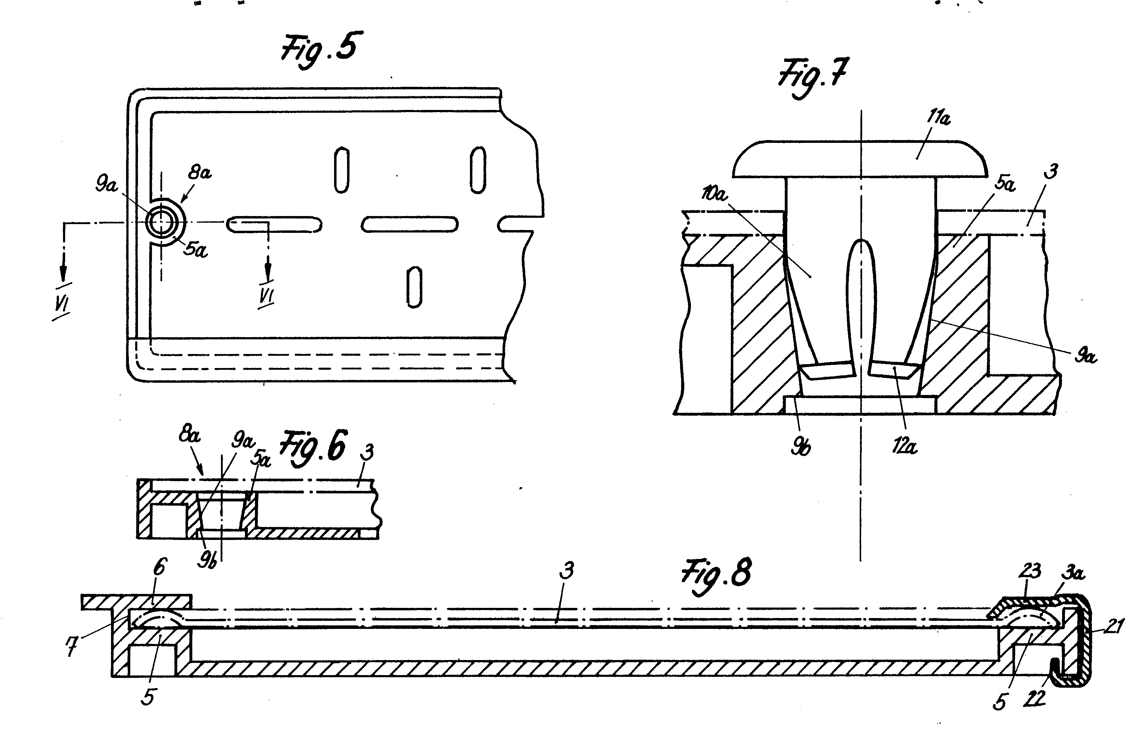

F i g. 5 und 6 die Teilansicht und den Teilquerschnitt eines weiteren Ausführungsbeispiels einer Verstärkungsunterlage aus Kunststoff nach Linie VI-VI von Fig. 5,

F i g. 7 den Querschnitt durch ein weiteres unlösbares Befestigungselement für das Nummernschild auf der Verstärkungsunterlage und

F i g. 8 den Querschnitt einer letzten Ausführungsform.

Wie aus der Zeichnung ersichtlich ist, wird bei der ersten Ausführung die Verstärkungsunterlage nach Fig. 1 bis 3 aus Kunststoff gebildet, durch eine Hinterlegefläche 1 mit Befestigungsausnehmungen 2 zur Schraubbefestigung am Fahrzeug und dem den Nummernschild 3 - punktiert - in Fig. 2 angedeutet - umgebenden Rahmen 4 mit umlaufender Randschulter 5 zur Auflage derselben (3) und gleichzeitiger Abdeckung der Verschraubung mit dem Fahrzeug.

Der Unterrand des Rahmens 4 ist im Querschnitt T-förmig verbreitert und bildet hierdurch eine Werbefläche 6 in Bandform zur Aufnahme des Autohändlers; im übrigen umgreifen die Seitenränder und der Oberrand des Rahmens 4 das Nummernschild 3 nur aussenseitig, so daß dieses (3) von aussen in die untere Ausnehmung 7 hinter der Werbefläche 6 einfach einzubringen ist.

Der unlösbaren Befestigung des Nummernschildes 3 und damit auch der Verschraubung mit dem Fahrzeug dienen die Befestigungsaugen 8 an den beidseitigen Schultern 5 und gegebenenfalls auch in der Mitte oben wie letzteres in der Zeichnung strichpunktiert angedeutet. Diese Befestigungsaugen 8 weisen jeweils sich konisch erweiternde Bohrungen 9 auf, in welche (9) ein innenkonischer Hohlpfropfen 10 mit Halterand 11 eingebracht wird für das gelochte Nummernschild 3. Der aufspreizbare Hohlpfropfen mit konischer Bohrung bei 12 sich erweiternd und bei 13 sich verengend nimmt jeweils einen konisch oder zylindrischen Spreiz stift 14 bzw. 15 zur unlösbaren Befestigung durch Zug A oder Schlag B auf, wie in Fig. 3 und 4 dargestellt ist.

Soweit die Bohrung 12 konisch erweitert ausgebildet ist, ist der Spreizstift 14 als Zugstift konisch erweitert oder wenn die Bohrung 13 konisch verengt ausgebildet ist, ist der Spreizstift 15 als Druckstift zylindrisch oder auch schwach konisch zulaufend ausgebildet. Der aufspreizbare Hohlpfropfen 10 kann überdies mit widerhakenartigen Nasen oder Ringen 16 versehen, ebenso der Spreizstift 14 bzw. 15 mit solchen Nasen oder Ringen 17 ausgerüstet sein, welche mit Rastausnehmungen 18 zusammenwirken können, um eine Lösungsmöglichkeit ohne Zerstörung unmöglich zu machen. Die Spreizstifte 14 bzw. 15 werden nach dem Ausziehen bzw. Einschlagen an ihrem vorstehenden Ende 19 bzw. 20 abgeschnitten und damit für Manipulationen unzugänglich. solange das jeweils überstehende Ende noch nicht abgeschnitten ist, ist bei entsprechender Ausführung auch eine Lösung möglich z.B. für Überführungsschilder.

Nach der weiteren Ausführung entsprechend Fig. 5 bis 7 ist das Befestigungsauge 8a an der hier nach innen gezogenen Schulter 5a mit einer sich konisch verengenden Bohrung 9a und offenem Bohrungsrand 9b versehen, so daß ein geschlitzter Pfropfen 10a, welcher einerseits mit einem Halterand 11a und anderer seits mit überstehendem Endrand 12a versehen ist, beim Einschub den Bohrungsrand 9b auffedernd übergreift und damit unlösbar verankert wird.

Schließlich ist in Fig. 8 noch eine Halteklammer 21 dargestellt zur lösbaren Befestigung von Nummernschildern, z.B. Überführungsschildern, welche bei 22 einerseits die Randschulter 5 zur Schildauflage 2 hintergreift und andererseits den Schildrand 3a des einzulegenden Nummernschildes mittels federndem Winkelarm 23 übergreift. Die übrigen Teile entsprechen dem ersten bzw. zweiten Ausführungsbeispiel.

**Ansprüche**

1. Verstärkungsunterlage aus Kunststoff für Zulassungskennzeichnen, insbesondere für Kraftfahrzeuge, welche das Nummernschild rahmenförmig umgibt und eine Hinterlegfläche mit Befestigungsausnehmungen besitzt, wobei eine umlaufende Randschulter zur Auflage des Nummernschildes vorhanden ist, dadurch gekennzeichnet, daß an dieser Schulter Befestigungsaugen für das Nummernschild vorgesehen sind zur unlösbaren Schildbefestigung bei abgedeckter Verschraubung der Unterlage mit dem Fahrzeug, wofür die Befestigungsaugen jeweils eine konische Bohrung aufweisen, in welcher ein innenkonischer Hohlpfropfen mit Halterand für das gelochte Nummernschild mittels Spreizstift unlösbar zu befestigen ist.

2. Verstärkungsunterlage aus Kunststoff für Zulassungskennzeichen, insbesondere für Kraftfahrzeuge, welche das Nummernschild rahmenförmig umgibt und eine Hinterlegfläche mit Befestigungsausnehmungen besitzt, wobei eine umlaufende Randschulter zur Auflage des Nummernschildes vorhanden ist, dadurch gekennzeichnet, daß an dieser Schulter Befestigungsaugen für das Nummernschild vorgesehen sind zur unlösbaren Schildbefestigung bei abgedeckter Verschraubung der Unterlage mit dem Fahrzeug, wofür die Befestigungsaugen jeweils eine konische Bohrung aufweisen, welche sich in Einschubrichtung eines geschlitzten Propfens mit Halterand einerseits und überstehenden Endrand andererseits verengt, derart, daß dieser bei Einschub den Bohrungsendrand übergreift und damit unlösbar verankert ist.

3. Verstärkungsunterlage nach Anspruch 1, dadurch ekennzeichnet, daß die konische Bohrung im Befestigungsauge sich in Einschubrichtung des Spreizstifts erweitert und der Hohlpfropfen bei erweiternder oder verengender Bohrung einen entsprechend konischen oder zylindrischen Spreizstift aufweist.

4. Verstärkungsunterlage nach Anspruch 3. dadurch ekennzeichnet, daß der aufspreizbare Hohlpfropfen aussenseitig mit Widerhaken - Nasen oder -Ringen Ausgerüstet ist und gegebenenfalls auch der Spreizstift solche Widerhaken - Nasen oder - Ringe aufweist, welche mit Rastausnehmungen zusammenwirken.

5. Verstärkungsunterlage nach einem der vorhergehenden Ansprüche 1 bis 5, dadurch gekennzeichnet, daß deren Unterrand zur Aufnahme von Werbung im Querschnitt T-förmig verbreitert ist.

6. Verstärkungsunterlage nach einem der vorhergehenden Ansprüche, dadurch gekennzeichnet, daß die beiden Seitenränder und der Oberrand den Nummernschild lediglich aussenseitig und nicht vorderseitig umgreifen.

7. Verstärkungsunterlage nach einem der vorhergehenden Ansprüche, dadurch gekennzeichnet, daß Halteklammern zur lösbaren Befestigung von Nummernschildern, zum Beispiel Überführungsschildern, versehbar sind, welche einerseits die Randschultern zur Schildauflage hintergreifen und andererseits den Schildrand des eingelegten Nummernschilds mit federndem Winkelarm übergreifen.

0 277 523

Fig.1

Fig.2

Fig.3

Fig.4

Fig.5

Fig.7

Fig.6

Fig.8

0 277 523